# EUROPÄISCHE PATENTSCHRIFT

(11) **EP 0 975 519 B1**
(45) Veröffentlichungstag und Bekanntmachung des Hinweises auf die Patenterteilung: **14.11.2001**
(21) Anmeldenummer: 98931933.0
(22) Anmeldetag: 17.04.1998
(51) Int. Cl.: B64D 25/02, B60N 2/42

(54) **SICHERHEITSSITZ FÜR LAND-, LUFT- UND SEEFAHRZEUGE**
SAFETY SEAT FOR LAND, AIR AND SEA VEHICLES
SIEGE DE SECURITE POUR VEHICULES TERRESTRES, AERIENS ET MARINS

(30) Priorität: 18.04.1997 DE 19716215
(43) Veröffentlichungstag der Anmeldung: 02.02.2000
(73) Patentinhaber: Autoflug GmbH & Co, D-25462 Rellingen (DE)
(72) Erfinder: HANSEN, Holger, D-20357 Hamburg (DE)
(74) Vertreter: Müller, Karl-Ernst, Dr., Dipl.-Ing.
(86) Internationale Anmeldenummer: DE9801073
(87) Internationale Veröffentlichungsnummer: WO9847762

(56) Entgegenhaltungen:
- DE-A- 3 306 839
- DE-A- 4 303 719
- US-A- 2 700 412
- US-A- 3 314 720
- US-A- 4 474 347

## Beschreibung

Die Erfindung betrifft einen in einem Land-, Luft- oder Seefahrzeug eingebauten Sicherheitssitz mit einem Sitzbereich und einem Rückenbereich sowie mit einem jeweils zwei Schultergurte und zwei Beckengurte aufweisenden und an einer fahrzeugfesten Struktur befestigten Sicherheitsgurtzeug, wobei die Schultergurte und die Beckengurte in einem Verschluß zusammengeführt sind.

Insbesondere in im Bereich der Luftfahrt und auch der Schiffahrt eingesetzten Fahrzeugen, vorzugsweise Transportflugzeugen und Hubschraubern, besteht das Problem, daß neben der Beförderung von Mannschaften im Wechsel auch eine möglichst große Transport- beziehungsweise Ladefläche zur Verfügung stehen soll; aus diesem Grund sollen die bei der Personenbeförderung einzusetzenden Sitze möglichst leicht demontierbar und platzsparend aufzubewahren sein.

Andererseits sollen die Sitze ein Höchstmaß an Sicherheit gegen die bei der Beförderung unter Umständen auftretenden körperlichen Beanspruchungen bieten, da die Anordnung der Sitze, insbesondere bei Transportflugzeugen und Hubschraubern, üblicherweise quer zur Flugrichtung erfolgt, so daß bei einem nicht auszuschließenden Crashfall die Aufprallenergie seitlich auf den Körper der zu befördernden Insassen wirkt. Ein entsprechender Sicherheitsaspekt tritt auch bei Landfahrzeugen auf, bei denen zum Beispiel nach Einwirkung einer Minendetonation hohe Aufprallenergien auftreten können, wenn das Fahrzeug in die Luft geschleudert wird und auf den Boden zurückfällt.

Ein Sicherheitssitz mit den gattungsgemäßen Merkmalen ist in der US-PS 44 74 347 beschrieben; hierbei ist eine feste Sitzfläche mit auf dem Boden des Fahrzeuges verankerten und als Stoßdämpfer ausgebildeten Tragrohren verbunden; der Rückenabstützung dient eine Gewebefläche, die zwischen zwei von den Tragrohren der Sitzfläche zum Dachbereich des Fahrzeuges gespannten Gurten aufgespannt ist. Zur Sicherung der Insassen ist ein Hosenträgergurt mit zwei an den die Sitzfläche haltenden Tragrohren befestigten Beckengurten und zwei an den Sitzspanngurten befestigten Schultergurten angeordnet, wobei die Schultergurte und die Beckengurte in einem zentralen Verschluß zusammengeführt sind.

Ein anderer Sicherheitssitz ist aus der US-PS 3 314 720 bekannt; der insoweit vorbekannte Sicherheitssitz besteht aus einem klappbar an einem Fahrzeugteil gehalterten Sitzgestell mit einer Sitzfläche, wobei an dem Sitzgestell eine ein Rückenteil sowie zwei Seitenteile aufweisende Hülle aus einem textilen Material über Gurte befestigt ist. Die Sicherung eines auf dem Sitz sitzenden Insassen erfolgt über einen Dreipunkt-Sicherheitsgurt mit einem an dem Sitzgestell gehalterten Beckengurt und einem an dem Befestigungsgurt für die textile Hülle befestigten Schulterschräggurt.

Ein weiterer Sicherheitssitz ergibt sich aus der US-PS 2 700 412, bei welchem zwischen einem klappbar an einem Fahrzeugteil gehalterten Sitzgestell eine textile Sitzfläche aufgespannt ist; als Rückenabstützung dient eine in gleicher Weise zwischen Rohrteilen aufgespannte Textilfläche. Die Sicherung der Insassen erfolgt über einfache an dem Sitzgestell gehalterte Beckengurte.

Mit den vorbekannten Sitzen ist jeweils der Nachteil verbunden, daß einerseits die Sicherung der Insassen gegen Querbeschleunigung über die verwendeten Sicherheitsgurte völlig unzureichend ist, da aufgrund der einwirkenden Beschleunigungskräfte der Körper des Insassen entweder hart auf die Sitzfläche und in den Gurt gedrückt oder aber je nach Ausbildung des Sicherheitsgurtes sogar ganz aus dem Gurt herausgedreht wird. Andererseits ist trotz der teilweise klappbar eingerichteten festen Einbauten zur Ausbildung der Sitzfläche und zur insbesondere kraftaufnehmenden Befestigung der Sicherheitsgurte die Ladefläche nicht voll auschöpfbar; zudem ist die Ausrüstung von Fahrzeugen mit den notwendigen Einbauten vergleichsweise aufwendig, und die Einbauten müssen bei der Herstellung des Fahrzeuges mit in die Überlegungen zur Zweckbestimmung einbezogen werden.

Der Erfindung liegt daher die Aufgabe zugrunde, einen Sicherheitssitz mit den gattungsgemäßen Merkmalen zur Verfügung zu stellen, der einerseits eine wirksame Sicherung der Insassen gegen insbesondere Querbeschleunigungen bietet, andererseits leicht zu demontieren und zu transportieren beziehungsweise mitzuführen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die fahrzeugfeste Struktur aus in der Vertikalen ausgerichteten und im Sitzbreitenabstand verankerten seitlichen Bauteilen besteht und daß das Sicherheitsgurtzeug als Sitzteil einen quer zwischen den seitlichen Bauteilen verlaufenden und längs der seitlichen Bauteile hochgeführten und im oberen Bereich des Rückenbereiches des Sicherheitssitzes jeweils an die seitlichen Bauteile angeschlossenen Sitzgurt aufweist, und daß die beiden Schultergurte in einem sich zwischen den seitlichen Bauteilen kreuzenden Verlauf von ihrer Anlenkung im Bereich des einen seitlichen Bauteils in Richtung auf das andere seitliche Bauteil zu dem Verschluß geführt sind, wobei zwischen dem Sitzgurt in einem zu den seitlichen Bauteilen parallelen Verlauf zu den Schultergurten hochgeführte und an diesen angeschlossene Rückengurte als Stützgurte verlaufen.

Die Erfindung zeichnet sich dabei in vorteilhafter Weise durch die Konzeption aus, daß der Insasse in einem seinen Körper voll umschließenden Gurtzeug gesichert ist, wobei insbesondere das Sicherheitsgurtzeug nicht nur eine Rückhaltefunktion, sondern über den Kräfte aufnehmenden und ableitenden und an eine fahrzeugfeste Struktur angeschlossenen Sitzgurt auch eine Kräfteaufnahmefunktion aufweist, weil das Sicherheitsgurtzeug alle Beschleunigungskräfte in Abwärtsrichtung unmittelbar aufnimmt. Dabei wirkt das Sicherheitsgurtzeug aufgrund seiner materialimmanenten Nachgiebigkeit in sich schon energieaufnehmend. Weiterhin vermittelt das den Körper des Insassen umschließende Sicherheitsgurtzeug einen vollständigen Schutz gegen auftretende Querbeschleunigungen. Der Sicherheitssitz läßt sich weiterhin durch einfache Handhabung leicht demontieren und platzsparend verstauen. Da das Sicherheitsgurtzeug den Körper des Insassen vollständig umschließt, ist der Sicherheitssitz anwendbar für alle Belastungsrichtungen, so daß dieser Sicherheitssitz in beliebiger Konfiguration ohne Rücksicht auf sonstige Gegebenheiten des Fahrzeuges eingebaut werden kann, sofern geeignete Befestigungspunkte an der fahrzeugfesten Struktur vorgesehen sind. Außerdem ist der Sicherheitssitz in vorteilhafter Weise sehr leichtgewichtig und preisgünstig in der Herstellung.

Ein besonderer Vorteil der Erfindung ist damit verbunden, daß die beiden Schultergurte in sich hinter den Nacken des Insassen kreuzendem Verlauf schlingenartig den Oberkörper des angeschnallten Insassen umgreifen; aufgrund dieser Anordnung der Schultergurte wird eine seitliche Verlagerung sowie ein Herausdrehen des Oberkörpers bei einwirkender Querbeschleunigung sicher vermieden; dies gilt auch für ein Herausrutschen des Insassen bei einer nach oben gerichteten Beschleunigung.

Nach einem Ausführungsbeispiel der Erfindung weisen die Schultergurte jeweils einen eingeschalteten Kraftbegrenzer auf, aufgrund dessen beim Insassen auftretende Belastungsspitzen reduziert werden.

Nach Ausführungsbeispielen der Erfindung ist vorgesehen, daß die Beckengurte in die Schultergurte übergehen oder alternativ beiderseits des Körpers unmittelbar an die fahrzeugfeste Struktur in Form der fahrzeugfesten seitlichen Bauteile angeschlossen sind, und aufgrund dieser Anordnung werden Lasten aus auf den Insassen einwirkenden Beschleunigungen unmittelbar in die fahrzeugfesten Bauteile eingeleitet.

Es kann vorgesehen sein, daß das Sicherheitsgurtzeug an längs der fahrzeugfesten seitlichen Bauteile beweglichen Schiebeelementen befestigt ist; es kann dabei zweckmäßig sein, wenn die Schiebeelemente eine Kraftbegrenzungseinrichtung aufweisen, wobei eine solche Kraftbegrenzungseinrichtung aus einem mechanischen Stoßdämpfer bestehen oder einen textilen Aufbau haben kann; aufgrund einer derartigen Anordnung werden die abwärts gerichteten Beschleunigungskräfte wirksam auf einen für den Insassen unschädlichen Betrag reduziert.

Nach einem Ausführungsbeispiel der Erfindung kann vorgesehen sein, daß die auf einer gleichen Seite des Sicherheitssitzes angeordneten Schiebeelemente über ein Distanzelement miteinander verbunden sind, wobei das Distanzelement zusätzlich ebenfalls eine Kraftbegrenzungseinrichtung aufweisen kann.

Nach einem Ausführungsbeispiel der Erfindung kann vorgesehen sein, daß die jeweils auf beiden Seiten des Insassen angeordneten oberen und unteren Schiebeelemente jeweils über Querstreben miteinander verbunden sind. Aufgrund dieser Anordnung werden die auf den Sicherheitssitz einwirkenden Beschleunigungen gleichmäßig auf die fahrzeugfeste Struktur übertragen. Bei einer solchen Anordnung erhöhen sich in vorteilhafter Weise die Möglichkeiten für die Befestigung des Sicherheitsgurtzeuges, so daß die Befestigung des Sicherheitsgurtzeuges auch an den Querstreben ausgebildet sein kann.

Nach einem Ausführungsbeispiel der Erfindung sind die fahrzeugfesten seitlichen Bauteile sowie die Querstreben als Rohrgestänge ausgebildet.

Nach Ausführungsbeispielen der Erfindung weist der Sicherheitssitz in seinem Rückenbereich und/oder Gesäßbereich ein textiles Gewebe zur zusätzlichen Abstützung auf, wobei ein derartiges textiles Gewebe weiterhin zwischen den zum Schulterbereich diagonal hochgeführten Abschnitten des Sitzgurtes und den Rückengurten des Sicherheitsgurtzeuges ebenfalls vorgesehen sein kann; damit erhält der Sicherheitssitz eine Form, ähnlich dem aus der US-PS 33 14 720 bekannten Sitz.

Schließlich kann nach einem Ausführungsbeispiel noch vorgesehen sein, daß der Sicherheitssitz eine Sitzplattform aufweist, die den Komfort des Insassen während des Fahrbetriebes erhöhen soll; diese Sitzplattform kann klappbar an der fahrzeugfesten Struktur befestigt sein.

Diese Sitzplattform stellt aber aufgrund der nach wie vor gegebenen Anordnung des Sitzgurtes kein strukturell belastetes Bauteil bei einwirkenden Beschleunigungen dar, da auch bei Anordnung einer Sitzplattform das Sicherheitsgurtzeug die einwirkenden Kräfte aufnimmt.

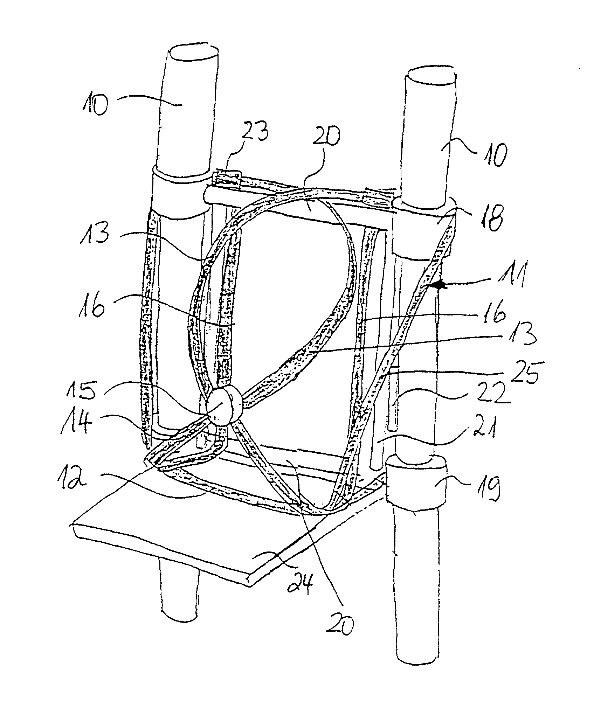

In der Zeichnung ist ein Ausführungsbeispiel wiedergegeben, welches nachstehend beschrieben ist. Die einzige Figur zeigt einen durch ein Sicherheitsgurtzeug gebildeten Sicherheitssitz in einer schematischen Darstellung.

Zur Halterung des Sicherheitssitzes an dem Fahrzeug sind bei dem dargestellten Ausführungsbeispiel zwei im Sitzbreitenabstand seitlich angeordnete Rohrsäulen 10 fahrzeugfest verankert, an denen das den Sicherheitssitz bildende Sicherheitsgurtzeug 11 befestigt ist. Das Sicherheitsgurtzeug 11 besteht aus einem Sitzgurt 12, der unter dem Gesäß des Insassen verläuft und beidseits des Körpers hochgeführt und im Schulterbereich des anzuschnallenden Insassen an die Rohrsäulen 10 angeschlossen ist. Das Sicherheitsgurtzeug 11 weist ferner jeweils einen Schultergurt 13 auf, der von der einen Schulter hinter den Nacken des Insassen auf die Seite der jeweils anderen Schulter und von dort zu einem auf dem Bauch des Insassen positionierten zentralen Verschluß 15 verläuft, wo er zusammen mit dem jeweils anderen Schultergurt verschlossen wird. In diesen zentralen Verschluß 15 münden auch zwei Beckengurte 14 als Bestandteil des Sicherheitsgurtzeuges 11, die ihrerseits den Sitzgurt 12 kreuzend unter dem Gesäß des Insassen herführend als Rückengurte 16 zu dem oberen Teil der Schultergurte 13 hochgeführt und hier angeschlossen sind. Alternativ kann aber vorgesehen sein, die Beckengurte 14 unmittelbar an den Rohrsäulen 10 anzuschließen und die Rückengurte 16 als gesonderte Bestandteile des Sicherheitsgurtzeuges 11 auszubilden. Bei dem dargestellten Ausführungsbeispiel sind in dem oberen Teil der Schultergurte 13 jeweils Kraftbegrenzungseinrichtungen 23 eingeschaltet.

Bei dem dargestellten Ausführungsbeispiel sind zur Befestigung des Sicherheitsgurtzeuges 11 an den Rohrsäulen 10 längs der Rohrsäulen 10 verschiebbare Schiebeelemente vorgesehen, und zwar obere Schiebeelemente 18 und untere Schiebeelemente 19, die aufgrund der Ausbildung der fahrzeugfesten Struktur als Rohrsäulen als Schiebehülsen ausgeformt sind. Die jeweils an einer Rohrsäule 10 befindlichen Schiebeelemente sind über Distanzelemente 21 miteinander verbunden, die eine Energieaufnahmevorrichtung 22 als Kraftbegrenzungsvorrichtung aufweisen, so daß eine Verschiebung der Schiebeelemente 18, 19 nur bei gleichzeitiger Kraftdämpfung möglich ist. Weiterhin sind die jeweils an den beiden unterschiedlichen Rohrsäulen 10 angebrachten und einander gegenüberliegenden Schiebeelemente 18, 19 jeweils durch Querstreben 20 miteinander verbunden, so daß auf diese Weise insgesamt eine Versteifung der fahrzeugfesten Struktur verwirklicht ist.

Bei dem dargestellten Ausführungsbeispiel ist zusätzlich eine Sitzplattform 24 vorgesehen, die an den beiden unteren Schiebeelementen 19 der beiden Rohrsäulen 10 gehaltert ist, wobei jedoch diese Sitzplattform 24 kein bei einwirkender abwärts gerichteter Beschleunigung strukturell belastetes Bauteil darstellt. Wie nicht weiter dargestellt, kann die Sitzplattform 24 an den Rohrsäulen 10 klappbar gehaltert sein.

Ebenfalls nicht dargestellt ist die Möglichkeit, im Sitzflächenbereich und/oder im Rückenbereich zusätzliche textile Gewebe einzusetzen, die auch gepolstert sein können; ferner kann der Bereich seitlich des Körpers zwischen den Rohrsäulen 10 und dem hier schräg verlaufenden Sitzgurt 12 mit einem textilen Gewebe ausgekleidet sein.

## Patentansprüche

1. In einem Land-, Luft- oder Seefahrzeug eingebauter Sicherheitssitz mit einem Sitzbereich und einem Rückenbereich sowie mit einem jeweils zwei Schultergurte (13) und zwei Beckengurte (14) aufweisenden und an einer fahrzeugfesten Struktur (10) befestigten Sicherheitsgurtzeug (11), wobei die Schultergurte (13) und die Beckengurte (14) in einem Verschluß (15) zusammengeführt sind, **dadurch gekennzeichnet, daß** die fahrzeugfeste Struktur aus in der Vertikalen ausgerichteten und im Sitzbreitenabstand verankerten seitlichen Bauteilen (10) besteht und daß das Sicherheitsgurtzeug (11) als Sitzteil einen quer zwischen den seitlichen Bauteilen (10) verlaufenden und längs der seitlichen Bauteile (10) hochgeführten und im oberen Bereich des Rückenbereiches des Sicherheitssitzes jeweils an die seitlichen Bauteile (10) angeschlossenen Sitzgurt (11) aufweist, und daß die beiden Schultergurte (13) in einem sich zwischen den seitlichen Bauteilen (10) kreuzenden Verlauf von ihrer Anlenkung im Bereich des einen seitlichen Bauteils (10) in Richtung auf das andere seitliche Bauteil (10) zu dem Verschluß (15) geführt sind, wobei zwischen dem Sitzgurt (12) in einem zu den seitlichen Bauteilen (10) parallelen Verlauf zu den Schultergurten (13) hochgeführte und an diesen angeschlossene Rückengurte (16) als Stützgurte verlaufen.

2. Sicherheitssitz nach Anspruch 2, **dadurch gekennzeichnet, daß** die beiden Schultergurte (13) einen eingeschalteten Kraftbegrenzer (23) aufweisen.

3. Sicherheitssitz nach Anspruch 1 oder 2, **dadurch gekennzeichnet, daß** die Beckengurte (14) in die Rückengurte (16) übergehen.

4. Sicherheitssitz nach Anspruch 1 oder 2, **dadurch gekennzeichnet, daß** die Beckengurte (14) beiderseits des Sitzbereiches des Sicherheitssitzes an den seitlichen Bauteilen (10) verankert sind.

5. Sicherheitssitz nach einem der Ansprüche 1 bis 4,
**dadurch gekennzeichnet, daß** das Sicherheitsgurtzeug (11) an längs der fahrzeugfesten seitlichen Bauteile (10) beweglichen Schiebeelementen (18, 19) befestigt ist.

6. Sicherheitssitz nach Anspruch 5, **dadurch gekennzeichnet, daß** die Schiebelemente (18, 19) eine Kraftbegrenzungseinrichtung aufweisen.

7. Sicherheitssitz nach Anspruch 5 oder 6, **dadurch gekennzeichnet, daß** die auf einer gleichen Seite des Sicherheitssitzes angeordneten Schiebeelemente (18, 19) über ein Distanzelement (21) miteinander verbunden sind.

8. Sicherheitssitz nach Anspruch 7, **dadurch gekennzeichnet, daß** das Distanzelement (21) eine Kraftbegrenzungseinrichtung (22) aufweist.

9. Sicherheitssitz nach einem der Ansprüche 5 bis 8,
**dadurch gekennzeichnet, daß** die jeweils auf beiden Seiten des Insassen angeordneten oberen und unteren Schiebeelemente (18, 19) jeweils über Querstreben (20) miteinander verbunden sind.

10. Sicherheitssitz nach Anspruch 9,
**dadurch gekennzeichnet, daß** die Befestigung des Sicherheitsgurtzeuges (11) an den Querstreben (20) ausgebildet ist.

11. Sicherheitssitz nach Anspruch 9 oder 10,
**dadurch gekennzeichnet, daß** die fahrzeugfesten seitlichen Bauteile (10) sowie die Querstreben (20) als Rohrgestänge ausgebildet sind.

12. Sicherheitssitz nach einem der Ansprüche 1 bis 11,
**dadurch gekennzeichnet, daß** an das Sicherheits gurtzeug (11) im Rückenbereich und/oder Gesäßbereich ein textiles Gewebe als zusätzliche Abstützung angeschlossen ist.

13. Sicherheitssitz nach einem der Ansprüche 1 bis 12,
**dadurch gekennzeichnet, daß** zwischen den zum Schulterbereich diagonal hochgeführten Abschnitten (25) des Sitzgurtes (11) und den Rückengurten (16) des Sicherheitsgurtzeuges (11) jeweils ein textiles Gewebe als Seitenabstützung angeschlossen ist.

14. Sicherheitssitz nach einem der Ansprüche 5 bis 13,
**dadurch gekennzeichnet, daß** eine an den fahrzeugfesten seitlichen Bauteilen (10) gehalterte Sitzplattform (24) vorgesehen ist, die an die jeweils unteren Schiebeelemente (18) angeschlossen ist.

## Claims

1. Safety seat built into a land, air, or sea vehicle having a seating area and a back area and comprising a safety belt member (11) that comprises two shoulder belts (13) and two lap belts (14) and that is fixed to a vehicle structure (10), said shoulder belts (13) and lap belts (14) are joined at a fastener (15), **characterized in that** the vehicle structure comprises vertically disposed side components (10) anchored at seat-width intervals and that the safety belt member (11) as seat component comprises a seat belt (12) that extends transversely between said side components (10) and upwardly along said side components (10) and in an upper region of said back area of said safety seat is connected to each of said side components (10), and that said two shoulder belts (13) cross one another between said side components (10) as they extend from a connection in the vicinity of a respective one of said side components (10), to the other side component (10), and then to said fastener (15), and wherein back belts (16) are provided as support belts and extend from said seat belt (12) parallel to said side components (10) upwardly to said shoulder belts (13), where they are connected.

2. Safety seat in accordance with claim 2, **characterized in that** said two shoulder belts (13) have an inserted force limiter (23).

3. Safety seat in accordance with claim 1 or 2, **characterized in that** the lap belts (14) transition into said back belts (16).

4. Safety seat in accordance with claim 1 or 2, **characterized in that** the lap belts (14) on both sides of the body are anchored to the lateral components (10).

5. Safety seat in accordance with any of claims 1 through 4, **characterized in that** the safety belt member (11) is attached to sliding elements (18, 19) that are movable along the fixed vehicle lateral components (10).

6. Safety seat in accordance with claim 5, **characterized in that** the sliding elements (18, 19) have a force limiting device.

7. Safety seat in accordance with claim 5 or 6, **characterized in that** the sliding elements (18, 19) arranged on the same side of said safety seat are connected to one another by means of a spacer (21).

8. Safety seat in accordance with claim 7, **characterized in that** the spacer (21) has a force limiting device (22).

9. Safety seat in accordance with any of claims 5 through 8, **characterized in that** each of the upper and lower sliding elements (18, 19) on one side of the occupant are connected to the corresponding sliding element on the opposing side by means of a cross-bar (20).

10. Safety seat in accordance with claim 9, **characterized in that** the attachment of the safety belt member (11) is at the cross-bars (20).

11. Safety seat in accordance with claim 9 or 10, **characterized in that** the fixed vehicle lateral components (10) and the cross-bars (20) are bars.

12. Safety seat in accordance with any of claims 1 through 11, **characterized in that** a textile webbing is attached to the safety belt member (11) in the back region and/or posterior region for additional support.

13. Safety seat in accordance with any of claims 1 through 12, **characterized in that** a textile webbing is provided for lateral support between each of the segments (25) of the seat belt (11) rising diagonally to the shoulder region and the back belts (16) of the safety belt member (11).

14. Safety seat in accordance with any of claims 5 through 13, **characterized in that** provided mounted on the fixed vehicle lateral components (10) is a seat platform (24) that is connected to each of the lower sliding elements (18).

## Revendications

1. Siège de sécurité intégré dans un véhicule terrestre, un aéronef ou un véhicule maritime comportant une assise et un dossier, ainsi qu'une ceinture de sécurité (11) présentant respectivement deux sangles d'épaule (13) et deux sangles de bassin (14) et fixée sur une structure (10) solidaire du véhicule, les sangles d'épaule (13) et les sangles de bassin (14) étant réunies dans une fermeture (15), **caractérisé en ce que** la structure fixée au véhicule comprend des composants (10) latéraux orientés dans le sens vertical et ancrés à la distance d'une largeur de siège et **en ce que** la ceinture de sécurité (11) présente, en tant qu'élément de siège, une sangle d'assise (12) disposée transversalement entre les composants (10) latéraux, installée le long des composants (10) latéraux et raccordée dans la partie supérieure de la zone de dos du siège de sécurité respectivement aux composants (10) latéraux, et **en ce que** les deux sangles d'épaule (13) sont guidées dans un tracé se croisant entre les composants (10) latéraux depuis leur articulation dans la zone d'un composant (10) latéral en direction de l'autre composant (10) latéral vers la fermeture (15), des sangles de dos (16) installées entre la sangle d'assise (12) dans un tracé parallèle aux composants (10) latéraux en direction des sangles d'épaule (13) et raccordées à celles-ci s'étendant comme sangles de soutien.

2. Siège de sécurité selon la revendication 2, **caractérisée en ce que** les deux sangles d'épaule (13) présentent un limiteur de force (23) enclenché.

3. Siège de sécurité selon la revendication 1 ou 2, **caractérisé en ce que** les sangles de bassin (14) se poursuivent par les sangles de dos (16).

4. Siège de sécurité selon la revendication 1 ou 2, **caractérisé en ce que** les sangles de bassin (14) sont ancrées des deux côtés de l'assise du siège de sécurité sur les composants (10) latéraux.

5. Siège de sécurité selon l'une quelconque des revendications 1 à 4, **caractérisé en ce que** la ceinture de sécurité (11) est fixée sur des éléments (10) coulissants (18, 19) mobiles le long des composants latéraux fixés au véhicule.

6. Siège de sécurité selon la revendication 5, **caractérisé en ce que** les éléments coulissants (18, 19) présentent un système de limitation de force.

7. Siège de sécurité selon la revendication 5 ou 6, **caractérisé en ce que** les éléments coulissants (18, 19) disposés sur un même côté du siège de sécurité sont reliés entre eux au moyen d'un élément d'écartement (21).

8. Siège de sécurité selon la revendication 7, **caractérisé en ce que** l'élément d'écartement 21) présente un système de limitation de force (22).

9. Siège de sécurité selon l'une quelconque des revendications 5 à 8, **caractérisé en ce que** les éléments coulissants (18, 19) supérieurs et inférieurs, disposés respectivement des deux côtés du passager, sont reliés entre eux respectivement par des entretoises diagonales (20).

10. Siège de sécurité selon la revendication 9, **caractérisé en ce que** la fixation de la ceinture de sécurité (11) est réalisée sur les entretoises diagonales (20).

11. Siège de sécurité selon la revendication 9 ou 10, **caractérisé en ce que** les composants (10) latéraux fixés au siège et les entretoises diagonales (20) sont conçus comme des tiges tubulaires.

12. Siège de sécurité selon l'une quelconque des revendications 1 à 11, **caractérisé en ce qu'**un tissu textile est raccordé comme soutien supplémentaire à la ceinture de sécurité (11) dans la zone du dos et/ou la zone d'assise.

13. Siège de sécurité selon l'une quelconque des revendications 1 à 12, **caractérisé en ce que** respectivement un tissu textile est raccordé comme support latéral entre les parties (25) de la sangle de siège (11) installées en diagonale par rapport à la zone d'épaule (11) et les sangles de dos (16) de la sangle de sécurité.

14. Siège de sécurité selon l'une quelconque des revendications 5 à 13, **caractérisé en ce qu'**il est prévu une plate-forme d'assise (24) maintenue sur les composants (10) latéraux qui, est raccordée aux éléments coulissants (18) respectivement inférieurs.
